# EUROPÄISCHE PATENTSCHRIFT

(11) **EP 4 163 260 B1**
(45) Veröffentlichungstag und Bekanntmachung des Hinweises auf die Patenterteilung: **28.01.2026**
(21) Anmeldenummer: 22200709.8
(22) Anmeldetag: 11.10.2022
(51) Int. Cl.: C02F 3/04, C02F 3/06, C02F 3/12

(54) **EINGEGRABENE KLEINKLÄRANLAGE MIT ZUSÄTZLICHEM WASSERBEHÄLTER**
UNDERGROUND SMALL CLARIFICATION PLANT WITH ADDITIONAL WATER TANK
PETITE STATION D'EPURATION ENTERRÉ AVEC RESERVOIR D'EAU SUPPLEMENTAIRE

(30) Priorität: 11.10.2021 DE 202021105490 U
(43) Veröffentlichungstag der Anmeldung: 12.04.2023
(73) Patentinhaber: Richter, Bodo, 53604 Bad Honnef (DE)
(72) Erfinder: Richter, Bodo, 53604 Bad Honnef (DE)
(74) Vertreter: Schaumburg und Partner Patentanwälte mbB

(56) Entgegenhaltungen:
- EP-A1- 3 636 405
- JP-A- 2015 148 434
- US-A1- 2006 283 795
- US-A1- 2016 376 177

## Beschreibung

Die Erfindung betrifft eine Kleinkläranlage, umfassend einen ersten Behälter mit einer Zuführung für Abwasser, in welchem eine Vorklärung infolge Absinkens von Feststoffteilen auf den Boden des ersten Behälters erfolgt, sowie einen zweiten Behälter, der mit dem ersten Behälter über einen Überlauf verbunden ist, über den vorgeklärtes Wasser dem zweiten Behälter zur weiteren Klärung zuführbar ist.

Eine solche Kleinkläranlage dient zur Reinigung von Abwasser bevorzugt für Ein- und Mehrfamilienhäuser, insbesondere für den Einsatz in Wohneinheiten für fünf bis zwanzig Personen. Typischerweise kommt eine Kleinkläranlage in kleinen Siedlungen, Gastwirtschaften oder Schutzhütten zum Einsatz, wenn eine Abwasserentsorgung durch Anschluss an große kommunale Kläranlagen aus technischen, satzungsrechtlichen oder finanziellen Gründen nicht in Frage kommt. Die Abwasserklärung erfolgt mittels zweier Klärbehälter, wobei in einem ersten Behälter die Vorklärung erfolgt und das vorgeklärte Wasser dem zweiten Behälter zugeführt wird, wo es durch eine Filtervorrichtung, zumeist ein biologisches Filter, weiter geklärt wird. Das geklärte Abwasser wird dann über einen unteren Ablauf aus dem zweiten Klärbehälter abgeleitet, beispielsweise an das umgebende Erdreich. Im Betrieb ist der erste Behälter stets bis zum Überlauf mit Abwasser gefüllt, während sich im zweiten Behälter kein Abwasser sammelt und somit weitgehend leer ist. Eine solche Kleinkläranlage wird meistens im Gartenbereich unterhalb der Erdoberfläche eingebaut. Bei Starkregen oder in grundwassergefährdeten Gebieten wirkt insbesondere auf den flüssigkeitsleeren zweiten Behälter eine erhebliche Auftriebskraft ein, wenn er von flüssigem Medium umgeben ist. Diese Auftriebskraft kann z.B. bei einem 3 m³ großen Behälter 30.000 N (entsprechend einer Gewichtskraft von 3 t) sein und es müssen erhebliche Vorkehrungen gegen diesen Auftrieb, z.B. durch Verankerung im Erdreich oder in Verbindung mit einer Betonplatte in der Erde, getroffen werden.

EP 3 636 405 A1 beschreibt eine Kleinkläranlage umfassend drei rotationsgeformte Behälter. Alle drei Behälter dienen der Klärung von Abwasser. Das Abwasser tritt in den ersten Behälter oben über eine Zuführung ein und das gereinigte Abwasser verlässt die Kleinkläranlage am dritten Behälter über einen oberen Auslass.

US 2016/376177 A1 beschreibt einen Abwassertank für den Einsatz im Erdreich, Bei diesem Tank wird ein Plastikbehälter mit einem Behälter aus Beton verbunden, der zumindest teilweise den Plastikbehälter umgibt, wodurch eine hydrostatische Auftriebskraft vermindert wird. Bei der Herstellung des Betoncontainers (jedoch nicht beim Betrieb des Abwassertanks) kann der Plastikbehälter mit Ballast befüllt werden, beispielsweise mit Wasser, Sand und/oder Steinen.

JP 2015 148434 A beschreibt eine Untergrundwasseranlage, für z.B. ein Wohngebäude mit einem eingegrabenen Wasserbehälter. Der Wasserbehälter ist mit seiner Unterseite mit dem Erdreich in Kontakt und wird mit Regenwasser gefüllt. Das Wasser kann zum Wärmen und zum Kühlen des Wohngebäudes verwendet werden. Die im Zusammenhang mit einer Kleinkläranlage auftretenden Probleme werden in diesem Dokument nicht angesprochen.

US 3 933 641 A beschreibt eine Kleinkläranlage mit drei starr miteinander verbundenen Behältern. Im ersten Behälter erfolgt eine Vorfilterung, im zweiten Behälter eine weitere Filterung mit verschiedenen Filtern. Ein unterhalb des zweiten Behälters angeordneter dritter Behälter dient als Sammelbehälter für das gefilterte Abwasser, das vermischt mit Wasser aus einem weiteren Behälter an der Erdoberfläche versprüht wird. Zumindest der zweite und der dritte Behälter sind vertikal übereinander angeordnet. Der zweite Behälter hat im Betrieb einen geringen Füllgrad mit Abwasser. Der dritte Behälter ist mit gefiltertem Abwasser aus dem zweiten Behälter gefüllt.

Es ist Aufgabe der Erfindung, eine Kleinkläranlage anzugeben, deren Anwendungsbreite und wirtschaftlicher Einsatz verbessert ist.

Diese Aufgabe wird für eine Kleinkläranlage mit den Merkmalen des Anspruchs 1 gelöst. Vorteilhafte Weiterbildungen sind in den abhängigen Ansprüchen angegeben.

Gemäß der Erfindung wird zusätzlich zum ersten Behälter für die Vorklärung und dem zweiten Behälter für die weitere Filterung des Abwassers mindestens ein dritter Behälter angeordnet, dem Regenwasser zuführbar ist, das im dritten Behälter gesammelt und über eine Entnahmeöffnung entnehmbar ist. Die mindestens drei Behälter sind in horizontaler Nebeneinanderstellung angeordnet und starr miteinander verbunden. Wenn die Einheit umfassend die drei Behälter im Erdreich verbaut und von Grundwasser oder Regenwasser umgeben ist, vermindert der mit Regenwasser gefüllte dritte Behälter den hydrostatischen Auftrieb der gesamten Einheit. Auf diese Weise wird die Gefahr des Aufschwimmens der gesamten Kleinkläranlage aus vorwiegend leichtem Kunststoff vermindert, wodurch Kosten eingespart werden und die Wirtschaftlichkeit der gesamten Kleinkläranlage verbessert wird. Beispielsweise kann der Aufwand für eine Ankervorrichtung gegen ein Aufschwimmen infolge hoher hydrostatischer Auftriebskräfte verringert und die Gefahrensituation entschärft werden.

Am Einsatzort für eine Kleinkläranlage wird in vielen Fällen auch ein Behälter für Brauchwasser für gewerbliche, landwirtschaftliche oder hauswirtschaftliche Anwendungen zur Bewässerung benötigt. Häufig ist hierzu eine RegenwasserSammelanlage auf dem Grundstück vorgesehen. Bei der Erfindung dient als Sammelbehälter hier der dritte Behälter, der die Kleinkläranlage mit den notwendigen ersten Behälter und zweiten Behälter ergänzt. Durch die Integration des dritten Behälters für Regenwasser verringert sich in der Gesamtheit der Aushub von Erdreich, der Materialaufwand zur Verfüllung der Behälter mit Kies und Sand und je nach Bodenbeschaffenheit verringert sich auch der Aufwand zur Herstellung einer Betonaufstellfläche für die Behälter. Auf diese Weise wird die Anwendungsbreite der Kleinkläranlage mit integriertem Regenwasserbehälter und auch die wirtschaftliche Nutzung weiterverbessert.

Der dritte Behälter für Wasser kann typischerweise an eine RegenwasserSammelanlage zu seiner Füllung angeschlossen sein. Bei Bedarf wird diesem dritten Behälter Wasser für die Bewässerung über eine Wasserentnahmevorrichtung, vorzugsweise mit Hilfe einer Pumpenvorrichtung, entnommen.

Gemäß einem bevorzugten Ausführungsbeispiel der Erfindung ist die Kleinkläranlage dadurch gekennzeichnet, dass die mindestens drei Behälter und ihre starre Verbindung untereinander im Werk vorgefertigt sind. Auf diese Weise erfolgt eine kostengünstige industrielle Vorfertigung und der Montageaufwand am Einsatzort R21007E ist dadurch verringert. Auch in der Logistik können Kosten eingespart werden, weil statt mehrerer Behälter nur noch ein Behältersystem eingekauft, transportiert und gelagert werden muss.

Die mindestens drei Behälter für die Kleinkläranlage sind aus Kunststoffmaterial gefertigt und sind geeignet, im Erdreich eingesetzt zu werden.

Ausführungsbeispiele der Erfindung werden nachfolgend anhand der Figuren erläutert. Darin zeigt:
- Fig.1: eine Kleinkläranlage mit integriertem Regenwasserbehälter, und
- Fig.2: unterschiedliche Anordnungen der Behälter auf einer Grundfläche.

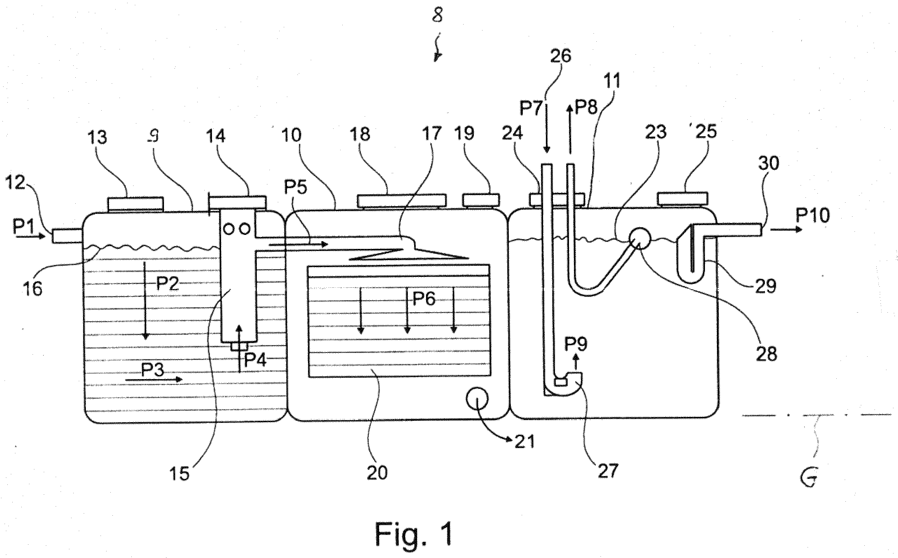

In Fig.1 ist eine Kleinkläranlage 8 nach der Erfindung dargestellt. Ein erster Behälter 9 dient der Vorklärung von Abwasser, welches in Richtung P1 über einen Zulauf 12 zugeführt wird. In diesem ersten Behälter 9 erfolgt eine Vorklärung des Abwassers infolge Absinkens von Feststoffteilen auf den Boden. Das Abwasser verläuft entsprechend den Pfeilen P2, P3 und P4 zu einem Vorfilter 15. Das vorgereinigte Abwasser gelangt über einen Überlauf in Höhe der Abwasseroberfläche 16 in Richtung des Pfeils P5 zu einer Verteilervorrichtung 17 in einem zweiten Behälter 10. Dort wird das vorgereinigte Abwasser auf eine als Biofilter 20 ausgebildete Filtervorrichtung verteilt und strömt in Richtung der Pfeile P6 nach unten und verlässt den zweiten Behälter 10 als gereinigtes Abwasser über mindestens einen Abwasserablauf 21. Die beiden Behälter 9 bzw. 10 haben an ihren Oberseiten mit Deckeln verschließbare Behälteröffnungen, nämlich eine Behälteröffnung 13, eine Behälteröffnung 14 für das Vorfilter 15, eine Behälteröffnung 18 für das Biofilter 20 und eine Kontrollöffnung 19 für die Kontrolle des Inhalts des zweiten Behälters 10.

Ein dritter Behälter 11 dient zur Aufnahme von Brauchwasser, was typischerweise von einer Regenwassersammelanlage über einen Regenwasserzulauf 26 entlang dem Pfeil P7 über eine verschließbare Behälteröffnung 24 zugeführt wird. Das zugeführte Wasser wird über einen Krümmer 27 zur Beruhigung des Wasserzulaufs in Richtung des Pfeils P9 zugeführt. Der Füllstand mit Wasser ist durch das Bezugszeichen 23 gegeben. Ein Siphon 29 mit einem Abfluss 30 definiert den maximalen Füllstand. Das Wasser wird gemäß Pfeil P10 abgeführt. Über eine schwimmende Wasserentnahme 28 kann Wasser in Richtung des Pfeils P8 mit Hilfe einer Pumpe (nicht dargestellt) entnommen und einer weiteren Verwendung zugeführt werden. Über eine verschließbare Kontrollöffnung 25 kann das Innere des dritten Behälters 22 inspiziert werden.

Die drei Behälter 9, 10, 11 sind in Nebeneinanderstellung auf einer horizontalen Grundfläche G angeordnet und starr miteinander verbunden. Jeder Behälter 9, 10, 11 ist mit seinem benachbarten Behälter an ihnen einander zugewandten Seiten miteinander verschweißt oder über Befestigungsmittel wie Ösen oder Adapter miteinander verschraubt. Jeder Behälter besteht aus thermoplastischem Kunststoff, vorzugsweise aus Polyäthylen oder aus Polypropylen oder aus glasfaserverstärktem Kunststoff. Vorzugsweise erfolgt die starre Verbindung untereinander durch Kunststoff-Schweißen. Jeder Behälter hat ein Volumen von 2,5 m³ bis 5 m³. Die Böden eines jeden Behälters 9, 10, 11 liegen auf der horizontalen Grundfläche G auf. Die drei Behälter 9, 10, 11 sind unterhalb der Erdoberfläche angeordnet. Der gefüllte dritte Behälter 11 kompensiert in Verbindung mit dem ersten Behälter 9 eine hydrostatische Auftriebskraft, die insbesondere auf den weitgehend flüssigkeitsleeren Behälter 10 bei umgebendem Wasser, z.B. Grundwasser, wirkt. Die drei Behälter 9, 10, 11 und ihre starre Verbindung untereinander sind in einem Werk als eine Einheit vorgefertigt und werden in diesem Zustand zum Einsatzort transportiert.

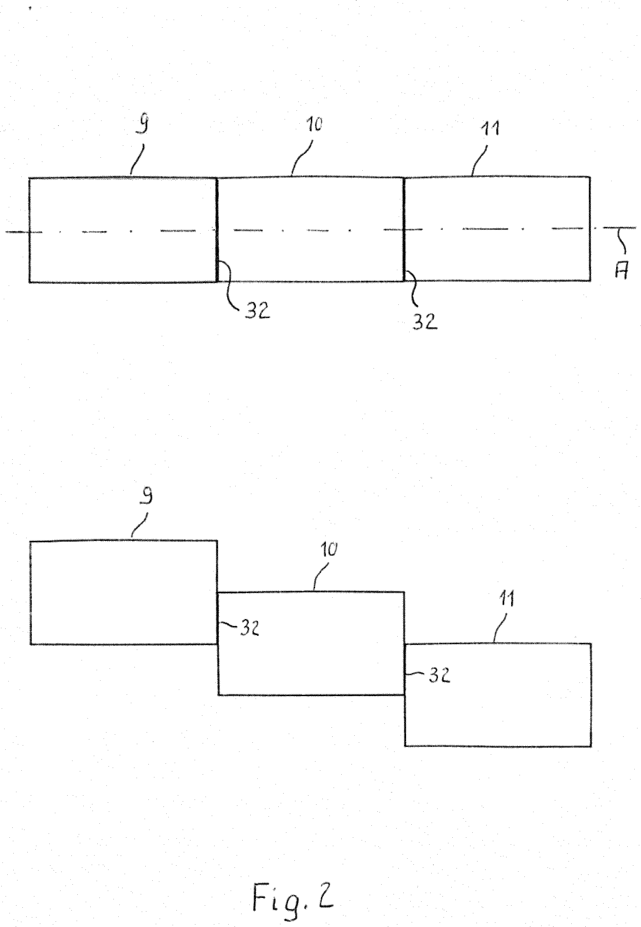

Fig.2 zeigt in einer schematischen Draufsicht zwei unterschiedliche Anordnungen der drei Behälter 9, 10, 11. In der oberen Darstellung sind die Behälter 9, 10, 11 in einer Reihe längs einer Achse A angeordnet und an ihren Seiten durch Schweißnähte 32 miteinander verschweißt. In der unteren Darstellung sind die drei Behälter 9, 10, 11 gegeneinander versetzt in Nebeneinanderstellung angeordnet.

Zahlreiche Variationen der Kleinkläranlage sind möglich. Die Kleinkläranlage kann um einen weiteren Behälter für Wasser ergänzt werden. Die Behälter 9, 10, 11 können unterschiedliche Volumina haben. Die Kleinkläranlage mit zusätzlichem Regenwasserbehälter ist vorzugsweise unterhalb der Erdoberfläche angeordnet.

### Bezugszeichenliste

- 8: Kleinkläranlage
- 9: erster Behälter für Vorklärung
- 10: zweiter Behälter für weitere Klärung
- 11: dritter Behälter für Wasser
- 12: Zulauf Abwasser
- 13: Behälteröffnung
- 14: Behälteröffnung Vorfilter
- 15: Vorfilter
- 16: Abwasseroberfläche
- 17: Verteilervorrichtung
- 18: Behälteröffnung Filter
- 19: Kontrollöffnung Filter
- 20: Biofilter
- 21: Abwasserablauf
- 23: Regenwasseroberfläche
- 24: Behälteröffnung
- 25: Kontrollöffnung Regenwasserablauf
- 26: Regenwasserzulauf
- 27: beruhigter Regenwasserzulauf
- 28: schwimmende Regenwasserentnahme
- 29: Siphon Regenwasserablauf
- 30: Ablauf für Wasser
- 32: Schweißnaht
- A: Achse
- G: Grundfläche

- P1 bis P10: Richtungspfeile

## Patentansprüche

1. Kleinkläranlage (8 mit integriertem Regenwassersammelbehälter, umfassend
einen ersten Behälter (9) aus Kunststoff mit einer Zuführung für Abwasser, in welchem eine Vorklärung infolge Absinkens von Feststoffteilen auf den Boden des ersten Behälters (9) erfolgt,
einen zweiten Behälter(10) aus Kunststoff, der mit dem ersten Behälter (9) über einen Überlauf verbunden ist, über den vorgeklärtes Abwasser dem zweiten Behälter (10) zuführbar ist, wobei im Betrieb der erste Behälter (9) bis zum Überlauf mit Abwasser gefüllt ist,
eine Filtervorrichtung (20) im zweiten Behälter (10), der das vorgeklärte Abwasser zur weiteren Filterung von oben zugeführt ist,
und mindestens einen Ablauf (21) unterhalb der Filtervorrichtung (20), über den das gefilterte Abwasser aus dem zweiten Behälter (10) und aus der Kleinkläranlage (8) als gereinigtes Abwasser ableitbar und im Betrieb der zweite behälter (10) weitgehend leer ist, wobei
mindestens ein dritter Behälter (11) der zur Aufnahme von Regenwasser dienst und aus Kunststoff angeordnet ist, dem Regenwasser über einen Regenwasserzulauf (27) zuführbar ist, das im dritten Behälter (11) gesammelt und über eine Entnahmeöffnung entnehmbar ist, wobei die mindestens drei Behälter (9, 10, 11) in horizontaler Nebeneinanderstellung angeordnet sowie starr miteinander verbunden sind,
und wobei bei einem Einsatz der Kleinkläranlage im Erdreich der mit Regenwasser gefüllte dritte Behälter (11) in Verbindung mit dem mit Abwasser gefüllten ersten Behälter (9) eine hydrostatische Auftriebskraft kompensiert.

2. Kleinkläranlage nach Anspruch 1, **dadurch gekennzeichnet, dass** der zweite Behälter (10) zwischen dem ersten Behälter (9) und dem dritten Behälter (11) angeordnet ist.

3. Kleinkläranlage nach Anspruch 1 oder 2, **dadurch gekennzeichnet, dass** die drei Behälter (9, 10, 11) miteinander verschweißt oder mittels Verbindungselementen verbunden sind.

4. Kleinkläranlage nach einem der vorhergehenden Ansprüche, **dadurch gekennzeichnet, dass** jeder Behälter (9, 10, 11) quaderförmig ist und dass jeweils zwei Behälter (9, 10; 10, 11) an ihren einander zugewandten Seiten, vorzugsweise gleichgroßen Seiten, miteinander verschweißt oder verschraubt sind.

5. Kleinkläranlage nach einem der vorhergehenden Ansprüche, **dadurch gekennzeichnet, dass** die drei Behälter (9, 10, 11) längs einer Achse angeordnet sind und dass der jeweilige Boden der mindestens drei Behälter (9, 10, 11) auf einer Ebene liegt.

6. Kleinkläranlage nach einem der vorhergehenden Ansprüche, **dadurch gekennzeichnet, dass** jeder Behälter (9, 10, 11) auf seiner Oberseite mindestens eine mit einem Deckel verschließbare Zugangsöffnung aufweist.

7. Kleinkläranlage nach einem der vorhergehenden Ansprüche, **dadurch gekennzeichnet, dass** jeder Behälter aus thermoplastischem Kunststoff, vorzugsweise aus Polyäthylen oder aus Polypropylen oder aus glasfaserverstärktem Kunststoff besteht.

8. Kleinkläranlage nach einem der vorhergehenden Ansprüche, **dadurch gekennzeichnet, dass** jeder Behälter ein Volumen von 2,5 m³ bis 5 m³ hat.

9. Kleinkläranlage nach einem der vorhergehenden Ansprüche, **dadurch gekennzeichnet, dass** der dritte Behälter (11) eine Entnahmevorrichtung enthält, mit der Wasser dem dritten Behälter (11) entnehmbar ist.

10. Kleinkläranlage nach einem der vorhergehenden Ansprüche, **dadurch gekennzeichnet, dass** die mindestens drei Behälter (9, 10, 11) und ihre starre Verbindung untereinander im Werk vorgefertigt sind.

## Claims

1. Small wastewater-treatment plant (8) with an integrated rainwater-collection tank, comprising a first tank (9), which is composed of plastic and has a feeding means for wastewater and in which pre-treatment is carried out as a result of solid parts sinking to the bottom of the first tank (9),
a second tank (10), which is composed of plastic and is connected to the first tank (9) via an overflow via which pre-treated wastewater is able to be fed to the second tank (10), wherein, during operation, the first tank (9) is in a state filled to the overflow with wastewater, a filter device (20) in the second tank (10), to which the pre-treated wastewater is fed from above for further filtering,
and at least one drain (21) below the filter device (20), via which the filtered wastewater is able to be discharged from the second tank (10) and out of the small wastewater-treatment plant (8) as purified wastewater, and, during operation, the second tank (10) is largely empty, wherein
there is arranged at least one third tank (11), serving for receiving rainwater and composed of plastic, to which rainwater is able to be fed via a rainwater inlet (27), said rainwater being collected in the third tank (11) and able to be removed via a removal opening,
wherein the at least three tanks (9, 10, 11) are arranged next to one other horizontally and are connected to one another rigidly,
and wherein, in the case of the small wastewater-treatment plant being used underground, the third tank (11) filled with rainwater, together with the first tank (9) filled with wastewater, compensates for a hydrostatic buoyancy force.

2. Small wastewater-treatment plant according to Claim 1, **characterized in that** the second tank (10) is arranged between the first tank (9) and the third tank (11).

3. Small wastewater-treatment plant according to Claim 1 or 2, **characterized in that** the three tanks (9, 10, 11) are welded to one another or are connected to one another by means of connecting elements.

4. Small wastewater-treatment plant according to one of the preceding claims, **characterized in that** each tank (9, 10, 11) is of cuboidal form, and **in that** in each case two tanks (9, 10; 10, 11) are welded or screwed to one another at their sides, preferably of the same size, that face one another.

5. Small wastewater-treatment plant according to one of the preceding claims, **characterized in that** the three tanks (9, 10, 11) are arranged along an axis, and **in that** the respective bottoms of the at least three tanks (9, 10, 11) lie in a plane.

6. Small wastewater-treatment plant according to one of the preceding claims, **characterized in that** each tank (9, 10, 11) has at its top side at least one access opening which is able to be closed off by a cover.

7. Small wastewater-treatment plant according to one of the preceding claims, **characterized in that** each tank consists of thermoplastic material, preferably of polyethylene or of polypropylene or of glass-fibre-reinforced plastic.

8. Small wastewater-treatment plant according to one of the preceding claims, **characterized in that** each tank has a volume of 2.5 m³ to 5 m³.

9. Small wastewater-treatment plant according to one of the preceding claims, **characterized in that** the third tank (11) contains a removal device by way of which water is able to be removed from the third tank (11).

10. Small wastewater-treatment plant according to one of the preceding claims, **characterized in that** the at least three tanks (9, 10, 11) and their rigid connections to one other are prefabricated at the factory.

## Revendications

1. Microstation d'épuration (8) avec récipient de collecte d'eau de pluie intégré, comprenant
un premier récipient (9) en matière plastique présentant une arrivée pour les eaux usées, au sein duquel intervient une décantation préalable du fait de la descente des particules solides au fond du premier récipient (9),
un second récipient (10) en matière plastique, relié au premier récipient (9) par un trop-plein par l'intermédiaire duquel les eaux usées préalablement décantées peuvent être acheminées jusqu'au second récipient (10), le premier récipient (9) étant rempli d'eaux usées jusqu'au trop-plein au cours du fonctionnement,
un dispositif de filtration (20) situé dans le second récipient (10) et qui achemine par le haut les eaux usées préalablement décantées en vue d'une filtration supplémentaire,
et au moins un drain (21) situé sous le dispositif de filtration (20) et par l'intermédiaire duquel les eaux usées filtrées peuvent être évacuées du deuxième récipient (10) et de la microstation d'épuration (8) sous forme d'eaux usées épurées et grâce auquel le deuxième récipient (10) est en grande partie vide pendant le fonctionnement,
au moins un troisième récipient (11), qui sert à recevoir l'eau de pluie et qui est en plastique, pouvant être alimenté en eau de pluie par l'intermédiaire d'une arrivée d'eau de pluie (27), laquelle eau de pluie est collectée dans le troisième récipient (11) et peut être retirée par l'intermédiaire d'un orifice de prélèvement,
les au moins trois récipients (9, 10, 11) étant agencés les uns à côté des autres horizontalement et étant reliés les uns aux autres de manière rigide,
le troisième récipient (11) rempli d'eau de pluie compensant, en liaison avec le premier récipient (9) rempli d'eaux usées, une force de portance hydrostatique en cas d'utilisation de la microstation d'épuration dans le sol.

2. Microstation d'épuration selon la revendication 1, **caractérisée en ce que** le second récipient (10) est agencé entre le premier récipient (9) et le troisième récipient (11).

3. Microstation d'épuration selon la revendication 1 ou 2, **caractérisée en ce que** les trois récipients (9, 10, 11) sont soudés ou reliés entre eux au moyen d'éléments de liaison.

4. Microstation d'épuration selon l'une quelconque des revendications précédentes, **caractérisée en ce que** chaque récipient (9, 10, 11) est de forme parallélépipédique et **en ce que** deux récipients (9, 10 ; 10, 11) sont respectivement soudés ou vissés l'un à l'autre sur leurs côtés, de manière préférée des côtés de même taille, tournés l'un vers l'autre.

5. Microstation d'épuration selon l'une quelconque des revendications précédentes, **caractérisée en ce que** les trois récipients (9, 10, 11) sont agencés le long d'un axe et **en ce que** le fond respectif des au moins trois récipients (9, 10, 11) est situé dans un plan.

6. Microstation d'épuration selon l'une quelconque des revendications précédentes, **caractérisée en ce que** chaque récipient (9, 10, 11) présente sur sa face supérieure au moins un orifice d'accès pouvant être fermé par un couvercle.

7. Microstation d'épuration selon l'une quelconque des revendications précédentes, **caractérisée en ce que** chaque récipient est constitué d'une matière plastique thermoplastique, de manière préférée du polyéthylène ou du polypropylène ou une matière plastique renforcée de fibres de verre.

8. Microstation d'épuration selon l'une quelconque des revendications précédentes, **caractérisée en ce que** chaque récipient présente un volume compris entre 2,5 m³ et 5 m³.

9. Microstation d'épuration selon l'une quelconque des revendications précédentes, **caractérisée en ce que** le troisième récipient (11) contient un dispositif de prélèvement avec lequel l'eau peut être prélevée à partir du troisième récipient (11).

10. Microstation d'épuration selon l'une quelconque des revendications précédentes, **caractérisée en ce que** les au moins trois récipients (9, 10, 11) et la liaison rigide entre ceux-ci sont préfabriqués en usine.
